(19) **Europäisches Patentamt European Patent Office Office européen des brevets**

(11) **EP 1 523 134 B1**

(12) **EUROPEAN PATENT SPECIFICATION**

(45) Date of publication and mention
of the grant of the patent:
**15.12.2010 Bulletin 2010/50**

(51) Int Cl.:
**H04L 12/56** (2006.01)

(21) Application number: **03103688.2**

(22) Date of filing: **06.10.2003**

(54) **Coordinated data flow control and buffer sharing in UMTS**

Koordinierte Datenflusssteuerung und Datenpufferteilung in UMTS

Contrôle coordonné de flux de données et partage de mémoire dans UMTS

(84) Designated Contracting States:
**AT BE BG CH CY CZ DE DK EE ES FI FR GB GR HU IE IT LI LU MC NL PT RO SE SI SK TR**

(43) Date of publication of application:
**13.04.2005 Bulletin 2005/15**

(73) Proprietor: **Telefonaktiebolaget LM Ericsson (publ)**
**164 83 Stockholm (SE)**

(72) Inventors:
• **Sunell, Kai-Erik**
**192 53 Sollentuna (SE)**

• **Johansson, Niklas**
**177 71 Järfälla (SE)**
• **Beming, Per**
**113 26 Stockholm (SE)**

(74) Representative: **Sjöberg, Mats Hakan**
**Ericsson AB,**
**Patent Unit Radio Networks,**
**Torshamnsgatan 23**
**164 80 Stockholm (SE)**

(56) References cited:
**EP-A- 0 912 016     US-A- 5 193 090**
**US-A1- 2003 093 530**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD OF THE INVENTION

This invention relates to a system and method for sharing scarce buffering resources between several users in a universal mobile telecommunication system (UMTS).

DESCRIPTION OF RELATED ART

Multimedia wireless networks are undergoing rapid expansion with the increase in demand for Internet like services such as web browsing, dynamic sharing of resources and streaming audio and video. Such wireless networks can either be mobile or fixed. Mobile networks of this type are known as third generation (3G) mobile communication systems. Unlike previous types of mobile networks that carried mainly circuit switched voice traffic from PSTN (Public Switched Telephone networks) 3G networks will carry various packet data from a variety of networks, including PSTN, B -ISDN, PLMN and Internet.

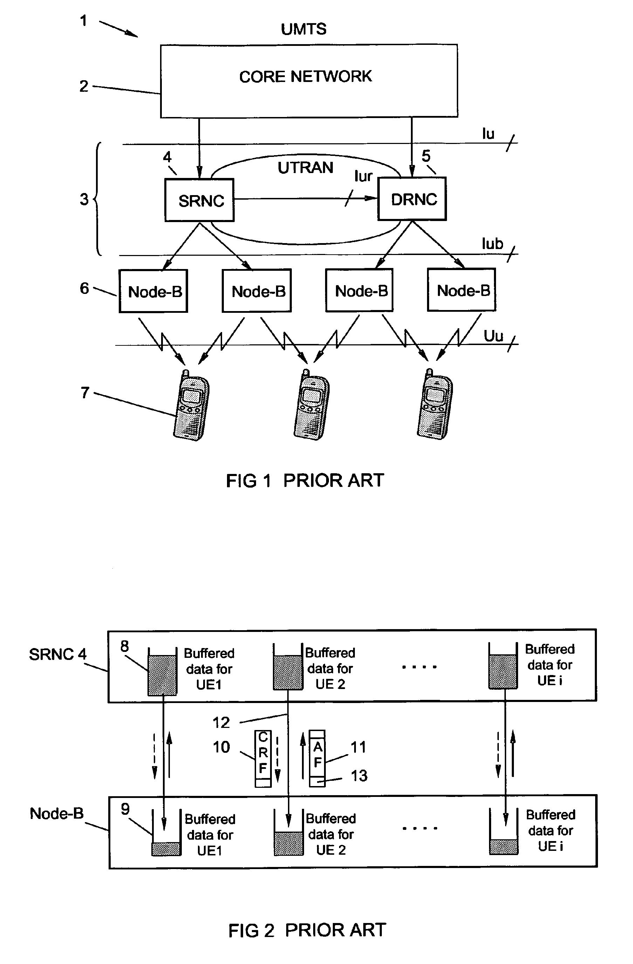

There is an ongoing process of standardising a set of protocols collectively known as the Universal Mobile Telecommunications Systems (UMTS). Figure 1 illustrates schematically a UMTS network 1 that comprises a 3G network referred to as a core network 2 and UMTS Terrestrial Radio Access Network (UTRAN) 3. The UTRAN comprises a plurality of Radio Networks Controllers (RNCs ). All RNCs are alike but different RNCs may have different roles. In Fig 1 a Serving RNC, SRNC 4, and a Drift RNC, abbreviated DRNC 5 are shown. Each RNC is connected to a set of Base Stations 6. A base station is often called Node -B . Each Node-B is responsible for communication with mobile terminals 7 (or User Equipment UE) within a given geographical cell. The serving RNC is responsible for routing user and signalling data between a Node -B and the core network. The interface between the core network and the RNCs is referred to as $I_u$, while the interface between the RNCs is labelled $I_{ur}$. The interface between the RNCs and the Node -Bs is denoted $I_{ub}$ and the air interface between the Node -Bs and the mobile terminals is the $U_u$ interface.

In release five of the WCDMA specification [1] a new transport channel referred to as High Speed Downlink Shared Channel (HS -DSCH) is introduced. For HS -DSCH, some new radio interface functionalities such as fast automatic rep eat request (ARQ) protocol, fast link adaptation and fast channel -dependent scheduling are provided as compared to the current downlink shared channel. All these new functionalities are placed in a new functional entity on the Medium Access Control (MAC) layer called MAC -hs entity that is located in Node -B. A new protocol referred to as frame protocol is also introduced that can both handle the data transport and perform flow control between user buffers in SRNC and in Node -B [2]. If data is transported from SRNC directly to Node -B the frame protocol is used over the $I_{ub}$ interface.

If data is transported from SRNC to Node -B via DRNC the frame protocol is used over the $I_{ur}$ and $I_{ub}$ interfaces.

In Figure 2 it is supposed that there are i (i = 1, 2, ...) users e ach one having a respective mobile terminal UE1, UE2, ... UEi. Data for each user arrives from the core network to SRNC where it is stored in buffers 8 each one associated with a respective user. If the user has many priority classes then there can be severa 1 buffers per user. For the sake of simplicity, the different priority classes are not considered and each user is shown to have one buffer. From the SRNC a user's stored data is transferred to the Node -B where it is temporarily stored in a corresponding individual buffer 9. From Node -B a user's data is sent to the individual UE over the air interface $U_u$.

In the frame protocol, a credit -based flow control mechanism is used where capacity request frames 10 and capacity allocation frames 11 are exchanged bet ween Node-B and SRNC separately for the individual users and therefore also for the corresponding individual data streams 12. The capacity request frames are sent by SRNC informing Node -B's buffer on the number of MAC -d Protocol Data Units (MAC -d PDU) that are pending (queuing) in the SRNC buffer for the respective UE. In response to the reception of a capacity request frame Node-B transmits an allocation frame to the SRNC, said allocation frame indicating the amount of MAC -d PDUs that SRNC is allowed to se nd to the UE. When SRNC has received the allocation frame it transmits the indicated number of MAC -d PDU to SNRC. The number of MAC-d PDUs Node-B permits SRNC to transmit are called credits. The credits are indicated in the allocation frames in a frame fie 1d 13 that commonly is called granted credits frame field (thus the name credit -based flow control). Node -B will thus control the flow of data between SRNC and Node -B.

The frame protocol can also be terminated in DRNC, which means that there can be two separate control loops, one between DRNC and Node -B, this loop being similar to the one just described wherein Node -B controls the incoming data flow from DRNC. The other control loop is between DRNC and SRNC wherein DRNC controls the incoming data flow from SRNC. However, the flow control loop - as seen by the Node -B - is alike in both cases. In the following, only the direct path between SRNC and Node -B is considered.

The main purpose of a well -behaving flow control scheme is to regulate the amount of user data that is transported from one buffer in SRNC to the corresponding buffer in Node -B without negatively influencing the quantity of data flowing over the air interface between a Node-B and its connected UEs. This means (a) a buffer in Node -B should never underflow or (b) Node- B must not contain too much data.

The term "underflow" means that a buffer in Node -B has no user data to send to a UE although SRNC contains user data that are pending (queuing) in the SRNC buffer for the same UE. Therefore Node -B buffers must not contain too little data.

A problem arises if Node -B contains too much data. This is so, because UEs are occasionally handed off from one Node -B to another whereas the frame protocol cannot transport data between different Node -Bs. For the s ake of robustness, it is therefore desirable to retain the user data in SRNC as long as possible. The handoff procedure is also called handover.

Further, the individual buffers in Node -B may not be too small, neither may they be too large. If the buffers are small, then allocation frames must be sent frequently. This is not feasible, because this would require extensive use of the $I_{ub}$ interface which is expensive to use. Further, according to the standard, the period with which allocation frames are sent is limited to 10 ms. It is thus not possible to send the allocation frames too frequently.

Buffer capacity in Node -B is generally expensive. If the buffers are too large, then Node -B will be expensive. It is not an easy task to expand the total buffer capacity in Node-B by adding new memory resources, because Node -B is often mounted in towers, masts, roofs etc.

The problem therefore boils down to keeping the amount of buffered data in Node -B as low as possible without negatively influencing the quantity of flowing data. This is also the main problem to be solved by the present invention.

This problem in its turn can be broken down in two problems: efficient flow control and efficient memory handling. The purpose of flow control is to even out unpredictable time dependent variations in user data flows, while the purpose of memory handling is to optimize the amount of memory used. We want to minimise the total amount of stored user data in Node-B (which is important because of a potential handoff procedure) wit h the following conditions: (a) data must not be lost due to overflow and (b) data flows must not be choked and thereby cause underflow.

In Figure 3 illustrates a known MAC -hs layer structure in Node -B. It comprises a flow control 14, retransmission protoc ol handlers HARQ (hybrid automatic request) 15, a scheduler 16, a transport format selection (TF selection) 17 and a shared radio channel 18. The new transport channels are shown at HS -DSCH.

In Figure 4 a previously known credit -based flow control mechanis m is illustrated. It makes use of a "per flow" based credit assignment scheme for controlling the user data flow of each individual UE.

In the following user data intended for UE1 are described. A capacity request frame, illustrated by arrow 19, is sent by SRNC thus informing Node -B's buffer 9 about the amount of pending user data in SRNC for UE1. In response Node -B allocates some capacity based on the free buffer space available in the buffer of UE1 in Node -B. Expressed in very general terms and non -complete manner the free buffer space is a buffer's maximum memory space minus any outstanding credits. Expressed in very general terms and incomplete manner the term "outstanding credits" refers to user data that have been granted credit for transmission from S RNC to Node-B but have not yet been received by Node -B. Typically the amount of credits is expressed in MAC -d PDUs units.

Next Node-B sends an allocation frame, represented by the uppermost arrow 20, indicating the amount of credits that SRNC is allowed t o send for UE1. This amount is indicated in the granted credits frame field.

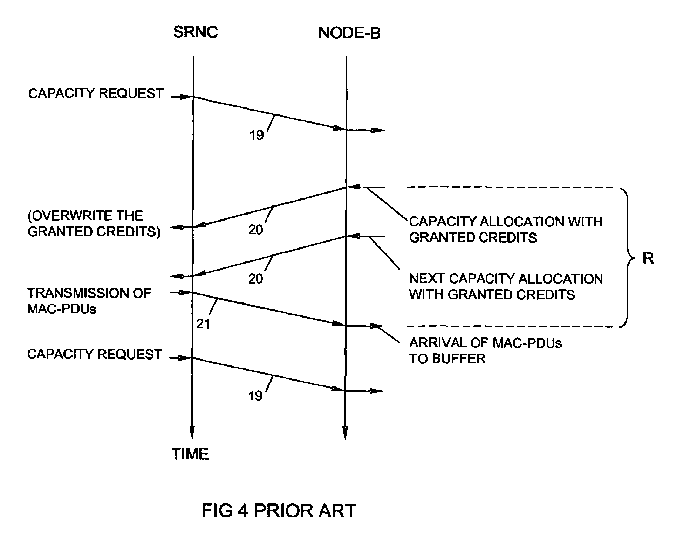

SRNC receives the allocation frame, extracts therefrom the number of granted credits, writes the credits into a non -shown counter overwriting any previous granted credits and sen ds the corresponding number of MAC -d PDUs to Node-B, as is represented by arrow 21. SRNC also subtracts the transmitted number of MAC -d PDUs from the counter. The time interval between the instant of allocation and the instant the allocated MAC PDUs are re ceived by Node-B is called the roundtrip time. In Figure 4 the round trip time is indicated at R. The bottommost arrow 20 represents a second instant at which Node -B sends a further allocation frame to SRNC. The two arrows 20 represent outstanding credits, i.e. credits which have been given but the corresponding data has not yet been received. It should be understood that in the time interval between reception of two successive allocation frames SRNC may transmit pending user data (MAC PDUs) to Node -B.

The scheduler in Node -B organizes the sequence in which user data buffered in Node -B are transmitted to the different UEs. User data scheduled for transmission to an individual UE are taken from the corresponding UE's buffer and are inserted in transport block s generated by the transport format selector. In particular the scheduler tells Node -B the transport block to be transmitted, the time slot to use for the transmission and the UE for which the transport block is intended. A transport block will have varying lengths depending on the amount of data to be sent to the different UEs. Each transport block is transmitted in a time slot of fixed duration, typically 2 ms, on the radio interface $U_u$.

Over the radio interface the transport blocks are transmitted in turns. Typically only one UE can make use of the time slot at any given instant. Alternatively, code multiplexing can be used in a time slot, implying that a time slot is shared by two or more UEs.

It should be noted that there is no relation whatsoever between the credit assignment procedures and the scheduling procedures. Data scheduling takes place at short intervals and is made dynamically based on the instantaneous channel quality of individual UEs, while a credit assignment procedure for a given UE take s place at much longer intervals. The credit assignment procedure is not related to the channel quality of a UE. A channel's quality can change several times during successive credit assignments.

Credits given an individual UE with the above known "per fl ow" based credit assignment scheme are independent credits given another UE. It is called "per flow" based because each user data flow is independent of other flows. The main shortcoming of this is that all buffers in Node-B need to be filled with user dat a in order to avoid underflow. The buffers thus need be filled regardless of the amount of data that can be actually scheduled over the radio channel. This is so, because it is impossible to predict which UE's buffer the scheduler will select for transmission.

Moreover, the total amount of buffered data in Node -B is directly proportional to the number of user data flows and not on the amount of data transmitted over the air The larger number of data flows there is, the more data will be buffered in Node -B. In the long run Node -B may store more data than it can deliver to the UEs, implying that large amounts of data is queuing for transmission from Node -B, data that not yet have been scheduled for transmission over the radio interface. If under these circumstances a UE is switched from one Node -B to new Node - B in a handover procedure there is no mechanism available to transfer the data already buffered in Node -B to the new Node -B and the buffered data is lost. Retransmission of the lost data must then take pla ce to the new Node -B. Retransmission from SRNC is a slow and expensive procedure since it takes place over the UTRAN interfaces. These are slow and typically traverse several network nodes.

WO-02/49292 discloses a flow control mechanism in a UTRAN network where an automatic repeater-request (ARQ) mechanism is implemented in order to lower the buffer level in Node-B. A problem arises since the above-described flow control method handles separate packet data streams independently of each other and the amount of data buffered in Node-B is lowered only for a given UE. Consequently, the total amount of buffered data, i.e. the sum of buffered data from several independent packet data flows, is directly proportional to the number of data streams that traverses through the node. Although the buffer level for a separate individual data stream can be lowered the total amount of buffered data can be therefore excessive for a large user population. Accordingly the problem remains, data must be retransmitted from SRNC to Node-B when a user, other than those that had their buffer levels reduced, is moved from one Node-B to another (handover).

US-A1 2003/0016698 describes a method for resetting a MAC layer entity in a WCDMA-system. By resetting the MAC layer entity upon reset of a RLC (Radio Link Control) entity it is possible to prevent that unnecessary data is buffered in the MAC layer entity. Thereby increased utilisation efficiency of the memory resources is achieved. A flow controller is shown but its operation is not disclosed.

EP 0 912 016 provides a remote terminal with bandwidth on demand in a wireless network. Remote hosts with packets to send to a base station participate in a contention during which each remote host requests access to the base station. Access requests may collide and colliding requests are subject to a conflict resolution. The base station allocates uplink bandwidth among the remote hosts requesting access, followed by allocation of bandwidth for its own downlink transmission.

The EP 0 912 016 patent is not concerned with control of transmission from a core network node in case the buffer resources in the receiving node are scare and buffer overflow and underflow must be avoided. In the EP patent no credits are given and accordingly the transmission control do not account for these.

In the EP 0 912 016 patent transmission of packets over radio is contention based. Applicant's invention, however, provides a strict control of every data unit received by Node-B. Node-B will only receive data units that immediately can be scheduled for transmission over radio to the user equipments.

SUMMARY OF THE INVENTION

One object of the invention is to provide a method and system for buffering, in Node-B, an amount of data generally equal to the amount of data scheduled for transmission to respective users.

Another object of the invention is to provide a method and a system for sharing a scarce buffering resource between several data streams by applying a method for coordinated flow control and buffering sharing.

In accordance with the invention the flow control process comprises a first credit assignment rule/scheme that (1) keeps a running count of the number of outstanding credits by counting the number of outstanding credits and increasing the outstanding credit count each time an allocation is made and by decreasing the outstanding credit count each time a user data unit is received, and (2) restricts allocated capacity such that it can never exceed the requested capacity. The first credit assignment rule/scheme makes it possible to predict the reception of user data in Node -B and satisfy the conditions (a) and (b) above. The time dependent variations of user data flows will thereby be smoothed out.

In accordance with the invention the flow control process uses a second credit assignment rule/scheme according to which channel quality indicators are used to co -ordinate the capacity allocations on a per -node basis. In doing so it is possible to share a scarce memory resource between several users proportionally to their experienced channel quality. The use of channel quality indicators w ill thus allow fulfilment of conditions (a) and (b) with a minimum of memory resources, thus giving a solution to the memory optimization problem.

The scare buffering resource is shared between the users proportionally to indicated channel qualities. In practice it means that each user's UE reports back to Node -B the channel quality of the transmission channel between Node -B and UE. Node-B uses the indicated channel qualities in order to share its buffering resources among its data streams. The flow control is co-ordinated such that the amount of credits given a separate data streams is computed as a function of the number of data streams that traverses through Node -B.

The total sum of credits given all data streams in Node -B is limited to a predefined value less which is than the amount of data SRNC requests to send to Node -B. This will ensure that there will always be memory space available for storing of data that have been transmitted from SRNC.

One of the main advantages of the invention is that the Nod e-B's buffer level depends only on the amount of scheduled data, that is data scheduled for transmission from Node -B to the respective UEs, instead of the number of packet data streams that traverses through the node. This means that the main buffering of user data can be sustained in SRNC, which in turn implies (1) reduced memory requirements for Node -B, (2) increased communication reliability, (3) improved robustness against error events that are caused by hand -offs, (4) smoothened traffic over the $I_{ub}$ and $I_{ur}$ interfaces, and (5) reduced amount of MAC -d PDUs transmitted from SRNC but not yet received at Node -B. Since transmissions are from SRNC are very slow it is important to keep the number of transmitted but not yet received MAC -d PDUs as low as possible.

BRIEF DESCRIPTION OF THE DRAWINGS

| Fig. 1 | shows a schematic view of a UMTS system, |
|---|---|
| Fig. 2 | shows a schematic view of buffers in SRNC and Node -B, |
| Fig. 3 | is a block view of a Node -B, |
| Fig. 4 | illustrates exchange of capacity request messages and capacity allo cation messages between SRNS and Node -B, |
| Fig. 5 | is a block diagram of the flow control system in accordance with the invention, a |
| Fig. 6 | is a flow diagram illustrating an example of the inventive per flow based credit assignment scheme, |
| Fig. 7 | is a flow diagram illustrating an example of the inventive per node based credit assignment scheme, |
| Fig. 8 | is a first part of a flow diagram of a per flow based flow control mechanism, |
| Fig. 9 | is a continuation of the flow diagram of Fig. 7, |
| Fig. 10 | is flow diagram showing the computation of granted credits in the flow diagram of Fig. 9, |
| Fig. 11 | is a first part of a flow diagram of a per node based flow control mechanism in accordance with the invention, |
| Fig. 12 | is a continuation of the flow diagram of Fig. 11, |
| Fig. 13 | is an initial part of a flow diagram of a per node based flow control mechanism, and |
| Fig. 14 | is a continuation of the flow diagram of Fig. 13 |

DETAILED DESCRIPTION OF EMBODIMENTS

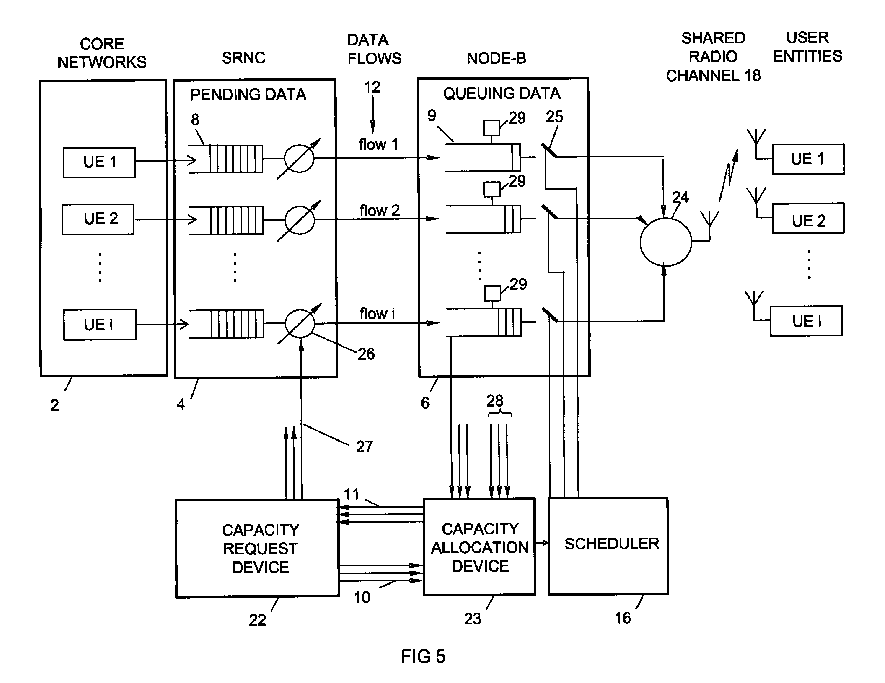

In Figure 5 a flow control system in accordance with the invention is shown to comprise a capacity request device 22 communicating with a capacity allocation device 23 over the $I_{ub}$ interface. The capacity request device is in the SRNC and the capacity allocation device is in Node-B. SRNC delivers user data to Node -B in the schematically shown data streams 12. The scheduler 16 communicates with the capacity allocation device and controls the order in which scheduled individual user data in buffers 9 are transmitted, via a transmitter 24 in time slots over the shared radio cha nnel. The order in which individual user data is transmitted corresponds to the order in which individual switches 25 at the buffer outputs are closed. Two or more switches can never be closed at the same time. Data flow control means 26 are shown to be connected at the output of each individual buffer 8 in SRNC. Each flow control means receives an individual control signal 27 from the capacity request device, this individual control signal comprising the previously mentioned amount of credits (number of al located MAC-PDUs) issued by Node -B. Reference number 28 represents channel quality indices QI1, QI2, ... QIi for the individual radio channels to the user entities UE1, UE2, ... UEi. The capacity allocation device comprise counters 29, one for each individual UE, for counting the number of outstanding credits for each individual user data flow. Although not shown in Fig, 5 for reasons of clarity, the capacity allocation device also comprises for each individual UE two more counters, one for counting the user's number of user data units pending in SRNC, the other for calculating the time instant when an allocation frame should be transmitted to SRNC.

The capacity request device and the capacity allocation device are both hardware and software implemented. The da ta flow control means 14 is implemented by means of a computer product run on a non -shown computer in SRNC.

The flow control process used by the capacity allocation device is a computer product run on a non-shown computer in Node -B. The computer product co mprises the software code portions for performing the below described steps of the flow control process in accordance with the invention. The computer program is loaded directly from a computer usable medium, such as floppy disc, CD record, Internet etc.

A first flow control process in accordance with the invention executes in Node-B. This first flow control process is in the following called a per flow based flow control process since it controls the data flow of each user independently of the data flow of other users. For clarity reasons it is described with reference to one single user.

In the per flow based flow control process capacity request and capacity allocation frames are exchanged between Node -B and SRNC for the single data flow. Node -B responds to capacity requests by sending capacity allocation frames at a regular basis. In other words, capacity allocations are performed periodically at some fixed time interval as long as there are some data units in SRNC pending for the UE. This allocation interval is marked at R in Fig. 4.

The per flow based flow control process in accordance with the invention comprises the following steps:

1. SRNC sends a capacity request to Node -B. The number user data units, commonly expressed in units of MAC -d PDUs, that are pending in SRNC at the moment of the capacity request is indicated in the capacity request frame. The pending data is defined as those MAC -d PDUs that are completely processed by SRNC and thus are ready to leave SRNC for transmission to Node -Bs buffer.

2. Node-B receives the request frame, reads the number of pending MAC -d PDUs and overwrites the previous value in its counter with the new value. Consequently, Node -B obtains some knowledge about the state (full, empty or a value in -between) of the buffer in SRNC.

3. Node-B computes the number of MAC -d PDUs that its buffer can accept/receive by subtracting the number of currently buffered MAC -d PDUs from some predefined target level, e.g. the total available memory space.

4. Node-B computes the amount of granted cre dits, i.e. the number of MAC -d PDUs that can be moved from SRNC to Node -B (at the moment of capacity allocation). The credits are computed according to the following steps:

i. Compute the amount of outstanding credits. Outstanding credits is defined as the nu mber of credits that has already been granted although the corresponding number of MAC -d PDUs have not yet arrived to Node-Bs buffer.

ii. Compare the number of MAC -d PDUs that Node B's buffer can accept/receive and the number of MAC -d PDUs that are pending in the SNRC. Select the smaller number as potential number of granted credits in order to ensure that the allocated capacity never exceeds the amount of requested capacity.

iii. Subtract any outstanding number of credits from the selected potential number of gran ted credits and use this as number of granted credits.

5. Node B sends a capacity allocation frame to SRNC. The number of granted credits is indicated in the allocation frame.

The comparison step ii is crucial. If it is omitted will the credit counter in the long run end up with a big number. The flow control process will then think there are many outstanding credits (which is false) and the data flow to Node -B will be choked since no more credits can be allocated and the buffer will underflow. Comparison step ii is called a credit assignment process/scheme.

A main advantage with this per flow based flow control process is that it is very robust. It will never fetch more user data units to Node -B than what is needed, which means Node -B will never receive more user data than it in its turn can transmit to the user between two allocation instants. The buffer can thus never overflow. Step ii sees to this. The flow control process will try to keep the queue length of buffered data in Node -B constant and there exists an upper limit which can never be exceeded.

The predefined target level should be sufficient high to avoid underflow in the buffer and not higher than the amount of data that can de scheduled for the UE.

Example 1

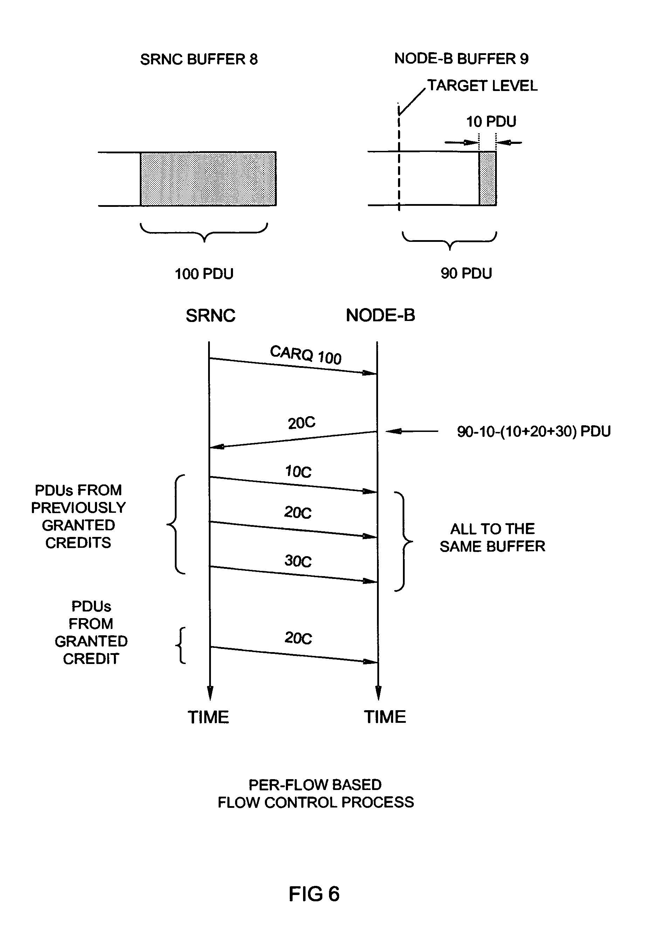

Refer to Figure 6. Suppose the SRNC buffe r has 100 MAC-d PDUs pending for transmission to a single user's buffer in Node -B. Suppose also that this single user's buffer has a total buffer capacity of 90 MAC -d PDUs and that, at the reception of the buffer request frame, 10 MAC-d PDUs are currently buffered in Node -B. Suppose also that Node -B, at three previous instants, has given SRNC 10, 20, and 30 credits (expressed in MAC -d PDU units). These 60 MAC-d PDUs are thus outstanding credits and the corresponding MAC -d PDUs have not yet been received by Node-B (for example due to delay in the transmission). The state of the single user's buffer in SRNC and in Node -B is illustrated at the top of the figure.

The arrow marked CAPREQ 100 represents step 1 in the per flow based flow control process and the arrow apex represents step 2. Step 3 is illustrated at the Node -B buffer. Of the total buffer space (90 MAC -d PDUs) 10 are occupied, leaving room for 80 MAC -d PDUs. Applying step 4i will result in 10+20+30 = 60 outstanding credits. Applying step 4ii means that the Node-B buffer has room for 80 MAC -d PDU. This figure of 80 should be compared with the 100 MAC -d PDUs that SRNC wants to transmit. In order to avoid overflow of the buffer the smaller figure 80 is selected. The buffer has with guarantee sufficient me mory space available for these 80. In step 4iii the outstanding number of credits (60 MAC -d PDUs) are subtracted from the selected number (80 MAC -d PDUs) leaving 20 MAC -d PDUs. Thus 20 credits are given. The arrow marked 20 C (credits) represents step 5. The next following arrows marked 10, 20 and 30 represent time instants when SRNC sends the previously granted MAC-d PDUs to the same user buffer in Node -B. The order in which these are transmitted is not necessarily the one indicated, but may vary. Finally , as represented by the bottommost arrow marked 20C, the MAC -d PDUs allocated in step 4iii are transmitted to node-B.

When the 20 credits are sent to SNRC, as represented by the upper arrow 20C , the corresponding outstanding credit counter 29 in Node -B will increase its outstanding credit count by 20 MAC -d PDUs. The outstanding credit count is decreased whenever data units arrive to the corresponding user data buffer in Node -B. A main benefit with the outstanding credits counter is that the outcome from th e capacity allocation is always predictable and therefore the buffer will never suffer the risk from overflow.

The fixed buffering resource in Node -B is barely sufficient to support one single data stream with continuous transmission using the highest possible transmission rate over HS -DSCH.

The per flow based flow control process will thus take care of the problem of overflowing buffers. It is based on the presumption that SRNC has more pending user data than buffer space available in Node -B.

It should be noted that in practice, when calculating the total available buffer space in step 3 the buffer is never filled to its maximum but to said predefined target level which is smaller.

Next a second flow control process is described which executes in Node -B. This second flow control process is in the following called a per node based flow control process since it controls the data flow of all the active users in Node -B in a coordinated fashion. With the node based flow control process one user's data flow is co ntrolled in dependence on the other user's data flows. The individual data flows are thus co -ordinated.

In the per node based flow control process capacity request frames and capacity allocation frames are exchanged between Node -B and SRNC like in the per flow based control process. The total amount of requested buffer capacity in Node -B is calculated and the total amount of available buffer resources in Node -B is calculated taking regard to any outstanding credits. Finally the credits are distributed among the individual data flows proportionally to the individual radio channel qualities/indicators of the data flows. In this manner the data flows will be co-ordinated. The scarce buffering resource is shared among several separate data flows. In order to ca lculate the total amount of available buffer resources each active user's amount of available buffer resources is calculated using the same steps 1 -5 as in the per flow based flow control process and added together. By re placing the language of steps 1 -5 with a language that refers to the total requested buffer capacity, total available buffer capacity and total amount of outstanding credits the node based flow control process comprises a further step 4iiii that follows step 4iii:

4iiii. Distribute obtained total amount of credits among the individual data streams proportionally to the radio channel qualities /indicators experienced by the respective UE.

Step 4iiii is called a credit assignment process/scheme.

A major advantage with using the channel quality indicators is that the memory resources are efficiently exploited since the main fraction of the buffered data belongs to those users that most likely can receive large amounts of data due to their good channel qualities. The amount of data flowing over the air interface $U_u$ depends on the radio channel quality. With the per - node based flow control process no more data units are sent to Node -B than Node-B can send to the user. Thus there is no point in filling a buffer to its maximum since the user will no t be able to receive all of the buffered user data.

The users share the same scare memory resource and the scarce memory resource is divided between the users according the their respective channel qualities. A user with a bad channel quality will therefore not receive any data.

The total amount of buffered data in Node -B will remain essentially constant and equal to the target level. Also the amount of buffered data will be less in comparison with the per flow based flow control process because it will no t be proportional to the number of users. Recall, that in the per flow based flow control process the total amount of data stored in the Node -B buffers is the sum of all queues which in its turn is proportional to the number of users.

Like in the per -flow based flow control process the per node based flow control minimises the amount of data which is stored in Node -B but the data so stored is still sufficient to exclude underflow. In the per node based flow control process the queue length will be shorter since data is transferred to the users that have the best channel qualities and therefore also are likely to get rid of their data quickly. The user with the best radio channel quality is namely allowed to transmit data, in its time slot, in an amount equal to the maximum data rate the radio channel is capable to transfer. This is based on the presumption that the user who has a good channel quality at the allocation instant is supposed to have a good channel quality also when the allocated data later arrive s to Node-B. The radio channel characteristics are time - correlated.

With the per -node based flow control process it is impossible to send more data to several users than to send all data to one user with max data rate. This means the following. Suppose there is one user to whom Node -B transmits with a high data rate and that this user also receives data from SRNC. Now if new users are added to the system there is no idea in fetching data to them because they will share the memory resource with the other use rs amongst which there is one who will seize all resources, namely the one that is transmitting with the maximum data rate to its UE.

Like in the per -flow based flow control there will be no overflow with the per -node based flow control because of step 4ii.

Still another advantage with the per -node based flow control is that the majority of data will be stored in SRNC and therefore data will not be lost if something goes wrong at lower levels in the system. Also the handoff problem will be solved.

The scarce buffering resource is thus shared according to the indicated channel qualities and the amount of credits allocated the independent packet data flows is inversely proportional to the number of packet data flows that passes through Node -B.

As the buffering resource is shared according to the channel qualities, it is possible to generate a transmission schedule where the actual quantity of transmitted user data remains unchanged over time. This can be motivated with the following extreme cases. In the case of the single data flow and the per flow based flow control process comprising steps 1 -5, the quantity of flowing data is unchanged since the granted credits are not influenced by the presence of other users. If the user population (number of user entities) is large then it is likely to find one or more users that have good or even superior radio channel conditions. In practice, this means that for a large population the Node -B's channel-dependent schemes can schedule data with a very high and even transmission rate. As the amount of buffered data in Node-B is proportional to the indicated channel qualities, underflow of the buffer is avoided. The scheduler transmits data to the user that has the best signal quality. The impact that the per node based flow control may have on the quantity of data that flows to the users should generally be minor.

The predefined target level in this case should be sufficient high to avoid underflow in an individual buffer and not higher than the amount of data that can de sch eduled for the individual UE.

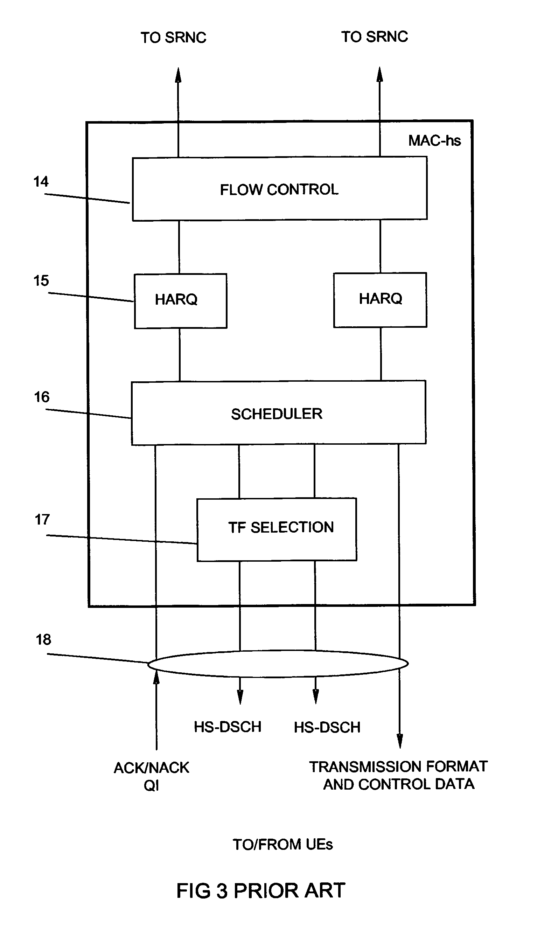

Each one of the UEs reports its radio channel quality to Node -B over the associated uplink signalling path shown in Figure 3.

Accordingly the Node -B has a fixed buffering resource that is shared proportionally among the data streams that traverses Node -B. Node-B responds to capacity requests by co - ordinating the individual capacity allocations in such a manner that the total sum of buffered data from several independent data streams is maintained at a predefined constant level in Node-B. Consequently, the total amount of buffered data is independent of the actual number of packet data flows that traverses through Node -B. Still an underflow of the buffer is avoided. This is because the total sum of buffered data from several inde pendent data streams will never decrease below the predefined constant level. As indicated above SRNC was assumed to always contain data waiting for transmission.

The arrival rate of the MAC -d PDUs at Node -B is regulated with the per node allocation algorithm comprising steps 1 -5. This is in its turn based on the channel quality indicators reported by the respective UEs.

With the above node based flow control process the major part of the user data will be stored in SRNC, and a minimum of data is stored in Node-B. Further, the data stored in Node -B is data that will be scheduled for transmission to the users, i.e. no "unnecessary" data will be stored in Node-B; "unnecessary" in the meaning that if handover takes place that data will be lost.

Example 2

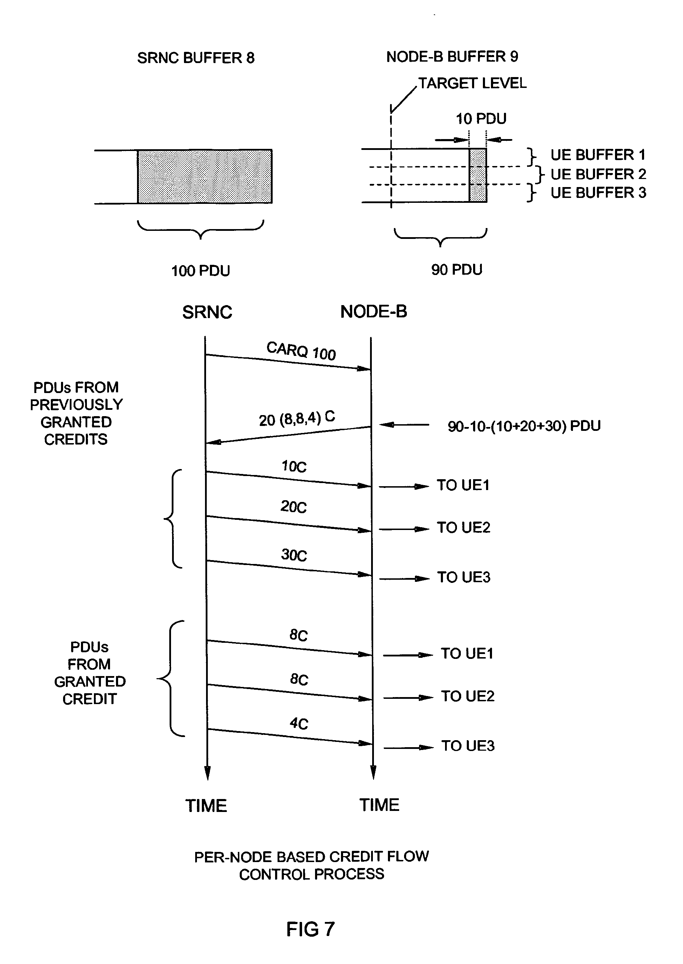

Refer to Figure 7. Assume there are three UEs, each one having a respective buffer in Node -B as is indicated by the broken horizontal lines through Node -Bs buffer. Generally the same assumptions as made in Example 1 apply. The buffers in Node -B are filled to various individual levels. Adding these together indicates that Node -Bs buffer is filled with 10 MAC - d PDUs as in Example 1. Assume also that SRNC has different amounts of user data to send to the three UEs. If these amounts are added SRNC has a total of 100 MAC-d PDUs to send to the three UEs like in Example 1.The total memory space of the buffers in Node -B is, like in Example 1, 90 MAC -d PDUs. Finally it is assumed that UE1 and UE2 both have reported a channel quality indicator QI=0,8 indicating a good cha nnel, while UE3 has reported a QI=0,4 indicating a less good channel. Also, the assumption in Example 1 apply, indicating that Node-B has a total predefined target level of 90 MAC -d PDUs.

Following steps 1-4iii in Example 1 the number of granted credits i s 20 MAC-d PDUs which in step 4iiii should be distributed proportionally among the three UEs in accordance with the following equation:

$$0,8x + 0,8x + 0,4x = 20$$

This gives x = 10.

UE1 will thus be allocated 0,8x5 = 8 memory units.

UE2 will thus be allocated 0,8x5 = 8 memory units.

UE3 will thus be allocated 0,4x5 = 4 memory units.

In step 5 the number of granted credits are transmitted. The second arrow from the top marked 20 (8,8,4) C (credits) represents step 5. The next following arrows marked 10, 20 an d 30 represent time instants when SRNC sends the previously granted MAC -d PDUs to the three different UEs user buffers in Node -B. Finally, as represented by the three bottommost arrows marked 8, 8, 4, the MAC -d PDUs calculated in step 4iiii are transmitted to the buffers of UE1, UE2 and UE3.

The number of credits granted (expressed in MAC -d PDUs) is also the same number of PDUs that will be transmitted to the UEs. Node -B will have memory space available for receiving them.

If the per flow based flow control process used in the prior art is used and the figures of Example 2 are applied, then Node -Bs buffer for user UE1 would be granted 80 potential credits minus the outstanding 10 credits, i.e.70 MAC -d PDUs credits are sent to SRNC. Node - Bs buffer for UE2 wo uld be granted 80 potential credits minus the 20 outstanding credits, i.e. 60 MAC-d PDUs would be granted. Similarly Node -Bs buffer for UE3 would be granted 80 - 30 MAC-d PDUs, i.e. 50 credits. In total 50+60+70=180 MAC -d PDUs would be granted, implying over flow of the buffers.

In a typical UTRAN system the delay over the $I_{ub}$ and $I_{ur-}$ interfaces can be very large in comparison with the periodicity with which capacity requests are sent from SRNC. This means that Node -B is able to send several credit values bef ore it receives any user data. It is therefore important that data downloaded to Node -B from SRNC are data for a user that at a previous instant has exhibited a good channel quality, so that the later on downloaded data with a high degree of probability wi 11 be scheduled within short, almost immediately, after its arrival at Node-B. This implies that only small amounts of data need to be stored in the Node - B buffers, thereby optimizing the total size of the buffer memory in Node -B. The data which is downloaded will be intended for UEs that are likely to be scheduled almost immediately and therefore no "unnecessary" data will be stored in Node -B; "unnecessary" in the meaning that it will be lost if an UE makes handover. An UE with a low channel quality is likely to be subject to a handover procedure, but in accordance with the per node allocation scheme such UEs will receive only marginal amounts of user data from SRNC.

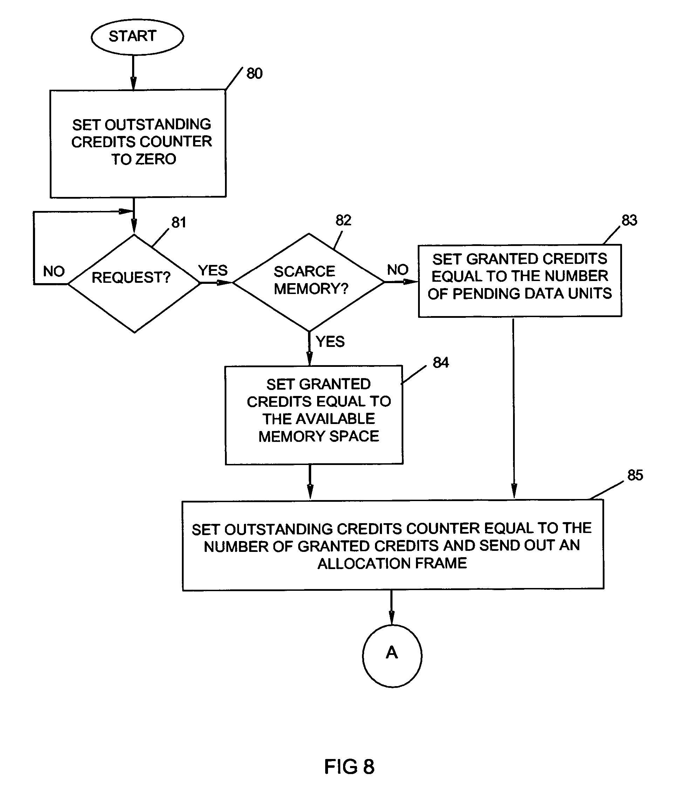

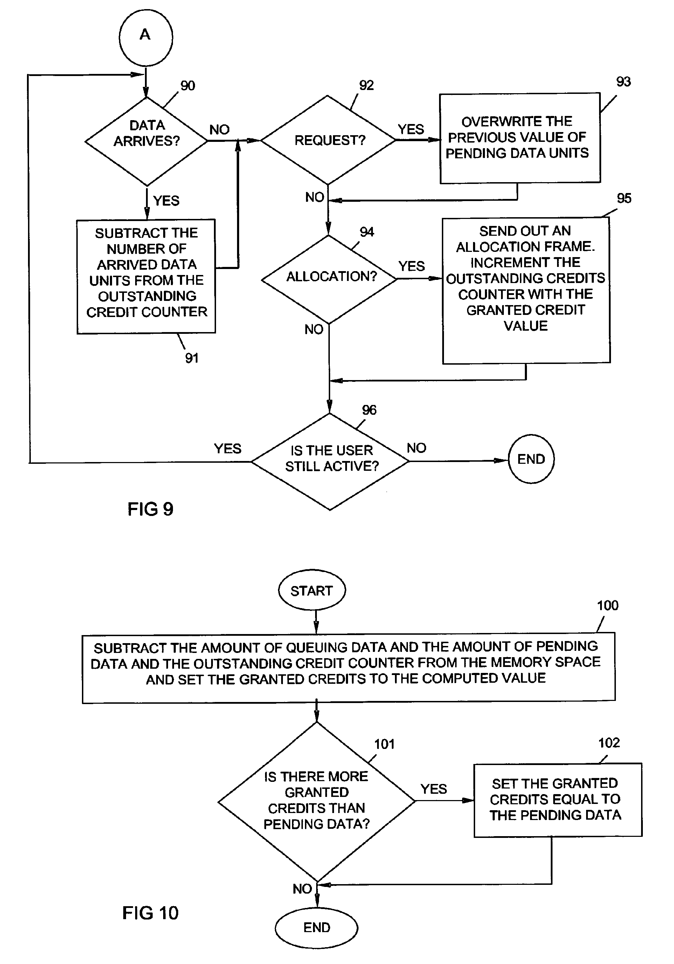

Refer to Figs. 8 and 9 which illustrates a per flow based flow control process which executes in Node-B. Below the flow control is described with regard to a single user although it should be understood that all user flows are controlled in the same fashion. The flow control starts with setting the outstanding credit counter to zero, box 80. Next the flow control goes into a loop and waits for a capacity request frame from SRNC, box 81, said frame indicating the amount of user data units pending for the individual user in SRNC. When a request frame is received the flow control compares the reques ted amount of data to the amount of memory space available in Node -B as totally seen, selection box 82. Two possibilities exist, either the available memory is sufficient or is it scarce. If the available memory is sufficient, then granted credits are set equal to the number of pending user data units, box 83. This tells SRNC to send all of its pending user data. If the available memory is scarce the amount of credits is set equal to the available memory space, box 84. In both cases the outstanding credit counter's credit count is set to the number of outstanding credits just calculated and an allocation frame is transmitted, box 85. The flow control continues with a loop, Fig. 9, in which it waits for user data to arrive to Node -B, box 90. If user data arri ves the number of received data units is subtracted from the outstanding credit count, box 91. If a capacity request frame has arrived from SRNC then the old pending user data count in the counter for pending user data is overwritten with the number of pen ding data indicated in the capacity request frame, box 93. The counter for calculation of the time instant an allocation frame should be sent monitors the length of the queue of qu euing user data in Node -B and determines when an allocation frame should be sent, decision box 94. If the queue tends to become short or if the number of qu euing data tends to become zero, an allocation frame is sent, box 95.When the allocation frame is about to be sent, the above steps 1 -4 execute; the number of granted credits i s calculated as a function of the available memory space, the amount of pending user data in SRNC, the number of outstanding credits. Finally the outstanding credit counter is increased with the calculated number of granted credits and the allocation frame is transmitted. Next the flow control checks if it any idea to continue the loop, selection box 96. If it was the last allocation frame that was sent in box 95 the user is not active any more and loop is exited at alternative NO of selection box 96. If th ere are more data to allocate, then the flow control loops back to selection box 90 and checks for the arrival of more user data, alternative YES at selection box 96. If data has arrived, the arrived amount of data is subtracted from the outstanding credit counter, box 91.

In the alternative the counter for calculation of the time instant an allocation frame should be sent is replaced with a counter that sends an allocation frame each tenth ms, irrespective of the contents of the capacity request frame.

Refer to Fig. 10 which shows how the number of granted credits is computed for an allocation frame that is sent by the per -flow based flow control in accordance with Figs. 8 and 9. The above steps 3 and 4i to 4iii are performed in box 100. Next a comparison i s made in order to ensure that the allocated number of credits can never exceed the requested capacity (= number of pending user data), selection box 101. If the allocated number of credits is larger, alternative YES, then the granted number of credits is set equal to the number of pending user data in SRNC, box 102. Step 101 is necessary because if the granted credits can exceed the amount of pending data, the outstanding credits counter 29 will not provide reliable information at all. In particular the co unter will be increased more often than decreased.

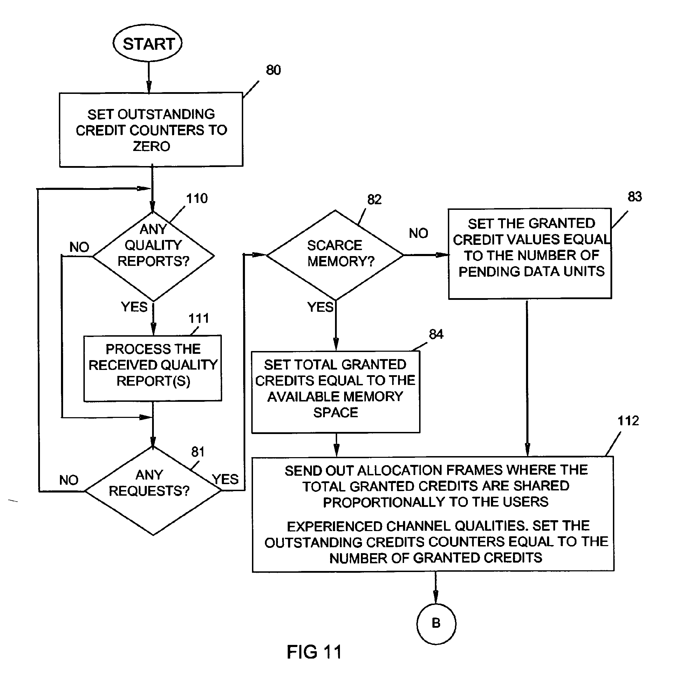

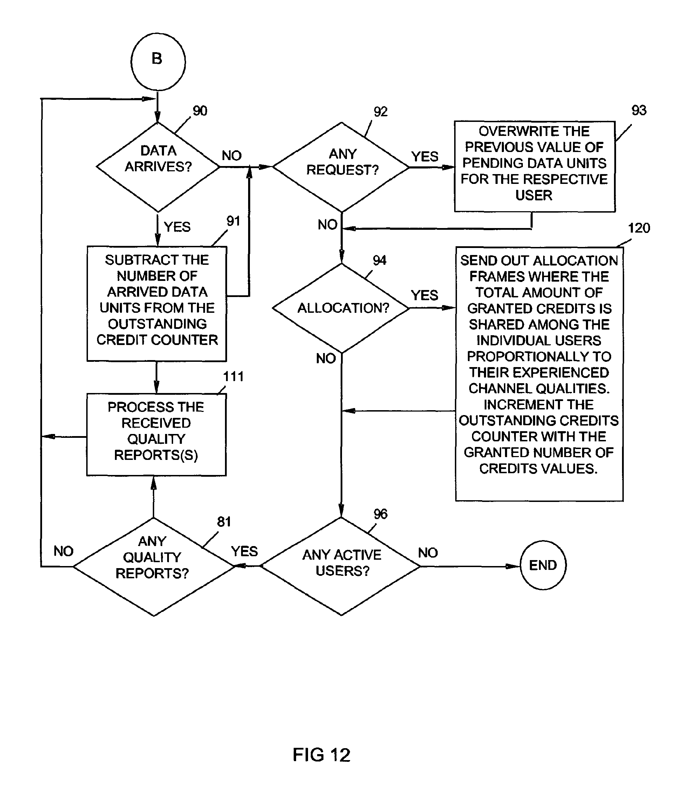

In order to minimize the total amount of buffered user data in Node -B the scarce memory resources are shared among several users proportionally to their experienced channel qualities by using a capacity allocation device that makes use of a per -node based flow control mechanism whose flow diagram is shown in Figs. 11 and 12. The per -node based flow diagram has many steps that are similar to the steps in the per -flow based flow diagram in Figs. 8 and 9 and these are therefore marked with the same reference numerals.

Fig. 11 starts resetting the outstanding credit counter to zero, box 80. Next a loop executes in which Node-B receives channel quality reports from the UE, box 110, and these are processed every time the UE transmits a report, box 111. This loop executes independently of the flow control. Flow control is based on quality information and flow control reports are processed irrespective if memory capacity is allocated or not. This loop is executed as long as UE listens to Node-B. With the outstanding credit memory zeroed Node-B waits to receive a an allocation request from SRNC, selection box 81. When a request is received Node-B calculates the number of credits that should be sent to SRNC. If the a mount of data is so small that everything fits into Node-B's memory, then Node-B can safely send an allocation frame which indicates that the number of granted credits is equal to the requested capacity, selection box 82 → NO → box 83. If memory resources a re scare, selection box 82 → YES, the requested capacity cannot be granted and instead a smaller amount of credits is given and this at several times. In particular the granted number of credits send to SRNC must be so restricted that when the corresponding data units arrives at Node-B all received data will have room in Node-B's memory, box 82 → YES → box 84 → box 112 "send out allocation frames...". Node-B will thus have to transmit several allocation frames until all of the data has been transferred from SRNC to Node-B. At B in Fig. 11 the situation is that Node-B has sent an allocation frame, but has not yet received any data from SRNC. After allocation and transmission Node-B will wait and see what happens.

The next step is to wait for data to arrive to Node-B. It is not certain that all of the data SRNC transmits will arrive due to errors taking place in the transport network. Sometimes it is also necessary to send several allocation frames before the data has been transferred from SRNC to Node-B. Accordingly the allocation made in Fig. 11 is sometimes not sufficient. It may even be the case that an allocation frame disappears in the transport network. In such a case it must be re-transmitted. The flow control process in Fig. 12 will take care of these instant s. There are five instances in Fig. 12; (1) data arrives at Node-B, box 90, (2) SRNC has transmitted a new capacity request frame, box 92, (3) it is time to send a new allocation frame, selection box 94, (4) all UEs have left Node-B, selection box 96, and (5) any of the UEs has sent a channel quality report, selection box 81. Instance (1) is required in order to keep the outstanding credit counter updated. Instance (2) is required because SRNC can send a capacity request anytime and Node-B must respond to t his by allocating more capacity. One cannot predict when new data arrives to SRNC and since SRNC sends capacity requests in response to these arrivals, this unknown arrival process (between for example Internet and SRNC) is the reason why a flow control pr ocess is needed between SRNC and Node-B. Instance (3) is needed because Node-B cannot always allocate the same amount of data that SRNC requests because of scare memory resources and because Node-B must sometimes send a plurality of allocations frames. If instance (3) was not present, then no flow control at all would be needed, because SRNC would immediately send all its data to Node-B. Once it is time to send an allocation frame, the amount of credits is calculated and distributed among the individual users in proportion to the respective channel qualities, box 120. Instance (4) is needed in order to halt the execution of the control loop when there are no UEs in the system. Instance (5) is present in order to continuously process channel quality indicator s. It should be noted that quality is reported more frequently, at 2 ms intervals, than allocation takes place; the allocation frequency is 10 ms. The control loop is repeated until all data at SRNC has been transferred.

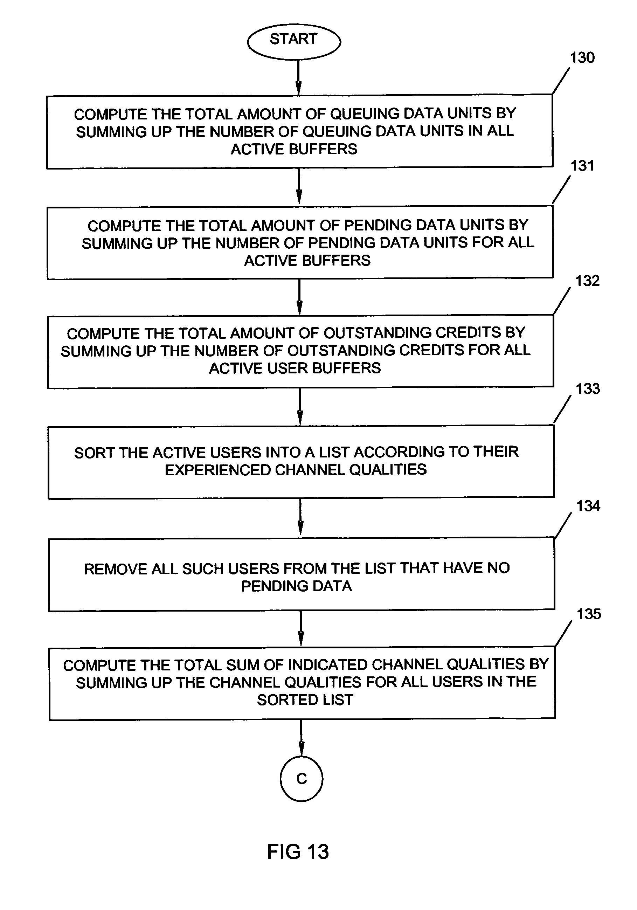

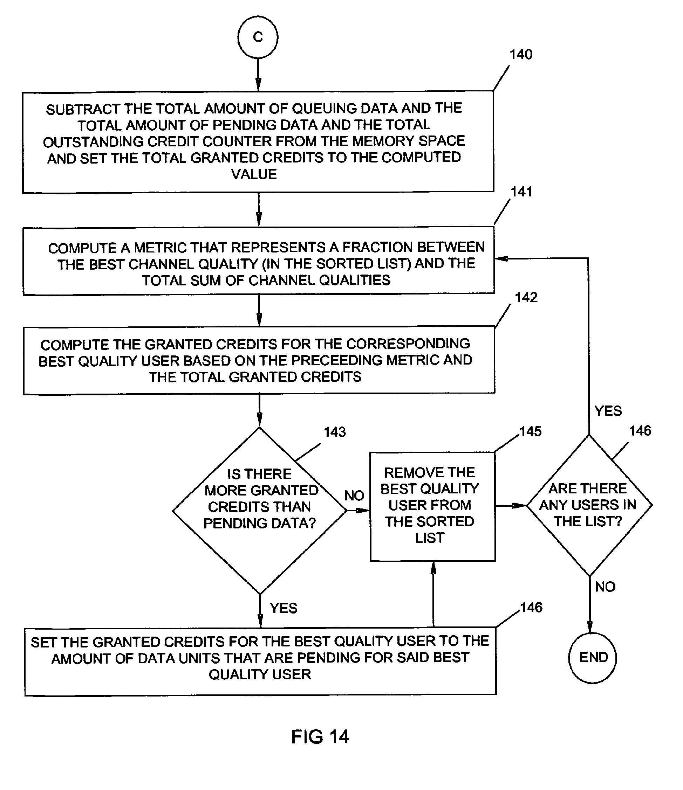

The process steps executed in Fig. 13 are followed by the process steps of Fig. 14 and together they describe the process steps performed in box 120 in Fig. 12. In a first step, box 130, the total amount of queuing data in Node-B are computed by summing up the number of queuing data units i n all active buffers in Node-B. This corresponds to step 3 above. In the second step, box 131, the total amount of pending data in SRNC is computed by summing up the number of pending data units for all active buffers in SRNC. This correspond to step 2 above. In a third process step, box 132, the total amount of outstanding credits is computed by summing up the number of outstanding credits for all active user buffers in Node-B. This corresponds to step 4i above. Next all active users are sorted into a list according to their experienced channel qualities, box 133. Users that have no pending data are next removed from the list, box 134. The total sum of the channel qualities is calculated by summing up the channel qualities for all users in the sorted list, box 135.

The next process step, box 140, is to subtract the amount of queuing data in Node-B and the total amount of pending data in SRNC, indicated by the pending data counter in Node-B, and the total outstanding credit counter from the available memory s pace in Node-B and set the total granted credits to the computed value, box 140. Next a metric that represents a fraction between the best channel quality (in the sorted list) and the total sum f channel qualities, box 141. Next the granted credits for the corresponding best quality user is calculated based on the preceding metric and the total granted credits, box 142. In decision box 143 it is decided if the number of granted credits is larger than the number of pending data. If Yes, then the granted credits for user with the best channel quality is set to the amount of data units that are pending for said best quality user. This step corresponds to process step 102 in Fig. 10 and is followed by step 145 in which the best quality user is removed from the 1 ist. Alternative No in decision box 143 is also followed by process step 145 which in its turn is followed by a decision box 146 which checks if there are any users in the list. If Yes a loop starts with process step 141. The loop executes the process step s 141-145 until there are no users left in the list. The scheme used for scheduling may either be channel dependent or may be of a round robin type. Channel dependent scheduling means that data is sent to the UE that has the best channel quality. If the fl ow control algorithm between SRNC and Node -B in accordance with the invention also is used for scheduling the transmissions between Node -B and the UE that statistically seen has the best channel quality, then very small amounts of data need to be stored in the Node-B buffers and the data so stored is the data to the correct user and is the data that will be immediately scheduled upon arrival in Node -B. The invention is thus similar to a very large buffer memory (in Node -B) and conventional per flow allocation scheme.

References

[1] 3rd Generation Partnership Project; Technical Specification Group Radio Access Network; ULTRA High Speed Downlink Packet Access; Overall Description; Stage 2, 3GPP TS 25.308
[2] 3rd Generation Partnership Project; Technical Specification Group Radio Access Network; UTRAN Iur user plane protocols for Common Transport Channel data streams, 3GPP TS 25.425

**Claims**

1. A flow control method for regulating a flow of data between a transmitting radio network node (4) and a receiving radio network node (6) in a radio transmission network, wherein

  - the transmitting node sends a capacity request (10) to the receiving node requesting the receiving node for permission to send an indicated number of data units that are pending in the transmitting node, and that the receiving node in response to the capacity request sends an allocation frame (11) to the transmitting node, said allocation frame indicating the number of data units the transmitting node is given permission to transmit, this latter number being referred to as credits, **characterized by** the receiving node performing the following steps for a data flow (12) between the transmitting and receiving nodes in case buffer resources (9) for storing of data units at the receiving node are scarce:

    - counting the instantaneous number of requested data units,
    - computing the number of credits to be granted by subtracting from a predefined target level of buffer filling,

      - the number of data units currently stored in the buffer, and
      - the number of credits previously given but not yet received, these credits below referred to as outstanding credits,

    - inserting the number of granted credits so computed in an allocation frame (10) for transmission to the transmitting node in response to the capacity request.

2. The method in accordance with claim 1, comprising comparing the number of data units currently stored in the buffer with the number of requested data units, selecting the smaller one of these numbers as a potential number of granted credits from which the number of outstanding credits is subtracted in order to obtain the number of granted credits.

3. The method in accordance with claim 2, wherein the receiving node keeping a running count of the number of outstanding credits, this being achieved

    - by increasing the count each time an allocation frame is sent, said count being increased with the number of granted credits indicated in the allocation frames, and
    - decreasing said count each time data units are received, said count being decreased with the number of received data units.

4. The method in accordance with any of claims 1-3, wherein the receiving node performing the following steps for each data flow (12) between the transmitting and receiving nodes in case buffer resources (9) for storing of data units at the receiving are scarce:

    - counting the instantaneous number of requested data units in each data flow to obtain a total number of requested data units,
    - computing the total number of credits to be granted in each data flow by subtracting from a predefined target level of buffer filling for the total number of data flows

      - the total number of data units currently stored in each of the buffers, and
      - the total number of credits previously given but not yet received, and

    - distributing the total amount of credits of the receiving node proportionally to the radio channel qualities (28) indicated by the respective user entities (7).

5. The method in accordance with claim 4, comprising limiting the total sum of user data in all data streams to a desired value less than or equal to the total requested number of data units.

6. The method in accordance with claim 4 or 5, comprising distributing the number of credits given by the receiving node proportionally to the radio channel qualities (28) indicated by the respective user entities (7) to which the receiving node is scheduling radio transmission of data units.

7. A receiving radio network node (6) for regulating the flow of data from a transmitting node (4), comprising a buffering resource (9), a capacity allocation device (23) for allocating individual amounts of user data to individual user entities (6), a flow control protocol, and a scheduler (16), the node (6) being configured to receive a capacity request (10) requesting the receiving node for permission to send an indicated number of data units that are pending in the transmitting node, and that the receiving node (6) in response to the capacity request is configured to send an allocation frame (11) to the transmitting node, said allocation frame indicating the number of data units the transmitting node is given permission to transmit, this latter number being referred to as credits, **characterized in that** radio network node (6) is further comprising means for counting the instantaneous number of requested data units, means adapted for computing the number of credits to be granted by subtracting from a predefined target level of buffer filling, the number of data units currently stored in the buffer and the number of credits previously given but not yet received, these credits below referred to as outstanding credits, and means configured for inserting the number of granted credits so computed in an allocation frame (10) for transmission to the transmitting node in response to the capacity request.

8. The receiving radio network node in accordance with claim 7, wherein the capacity allocation device (23) comprises a counter (29) for keeping a running count of the instantaneous number of outstanding credits, outstanding credits being defined as the number of data units that the allocation device has permitted the transmitting node (4) to send, although the corresponding number of data units has not yet arrived at the receiving node (6).

9. The receiving radio network node in accordance with claim 7 or 8, wherein a distribution device adapted to distribute the total number of credits given by the receiving node proportionally to the radio channel qualities (28) indicated by the respective user entities (7) to which the scheduler (16) is scheduling radio transmission of data units.

**Patentansprüche**

1. Flusssteuerverfahren zum Regulieren eines Datenflusses zwischen einem Funknetz-Übertragungsknoten (4) und einem Funknetz-Empfangsknoten (6) in einem Funkübertragungsnetz, worin

- der Übertragungsknoten eine Kapazitätsanforderung (10) an den Empfangsknoten sendet, die vom Empfangsknoten eine Erlaubnis anfordert, eine angezeigte Anzahl von Dateneinheiten zu senden, die im Übertragungsknoten noch nicht erledigt sind, und dass der Empfangsknoten als Antwort auf die Kapazitätsanforderung einen Zuweisungsrahmen (11) an den Übertragungsknoten sendet, wobei der Zuweisungsrahmen die Anzahl von Dateneinheiten anzeigt, die zu senden dem Übertragungsknoten erlaubt ist, wobei diese letztere Anzahl als Credits bezeichnet wird, **dadurch gekennzeichnet, dass** der Empfangsknoten die folgenden Schritte für einen Datenfluss (12) zwischen den Übertragungs- und Empfangsknoten für den Fall ausführt, dass Pufferressourcen (9) zum Speichern von Dateneinheiten am Empfangsknoten knapp sind:

- Zählen der momentanen Anzahl von angeforderten Dateneinheiten,
- Berechnen der Anzahl von zu gewährenden Credits durch Subtrahieren von einem vordefinierten Zielniveau der Pufferfüllung
- die Anzahl von Dateneinheiten, die gegenwärtig im Puffer gespeichert sind, und
- die Anzahl von Credits, die vorher ausgegeben, aber noch nicht empfangen wurden, wobei diese Credits unten als ausstehende Credits bezeichnet werden,
- Einrücken der Anzahl von so berechneten gewährten Credits in einen Zuweisungsrahmen (10), um als Antwort auf die Kapazitätsanforderung an den Übertragungsknoten übertragen zu werden.

2. Verfahren nach Anspruch 1, umfassend: das Vergleichen der Anzahl von Dateneinheiten, die gegenwärtig im Puffer gespeichert sind, mit der Anzahl von angeforderten Dateneinheiten, wobei die kleinere dieser Zahlen als eine potentielle Anzahl von gewährten Credits ausgewählt wird, von denen die Anzahl von ausstehenden Credits subtrahiert wird, um die Anzahl von gewährten Credits zu erhalten.

3. Verfahren nach Anspruch 2, worin der Empfangsknoten einen laufenden Zählerstand der Anzahl von ausstehenden Credits aufrechterhält, wobei dies erzielt wird

- durch Erhöhen des Zählerstands, jedes Mal, wenn ein Zuweisungsrahmen gesendet wird, wobei der Zählerstand um die Anzahl von gewährten Credits erhöht wird, die in den Zuweisungsrahmen angezeigt sind, und

- Reduzieren des Zählerstands, jedes Mal, wenn Dateneinheiten empfangen werden, wobei der Zählerstand um die Anzahl von empfangenen Dateneinheiten reduziert wird.

4. Verfahren nach einem der Ansprüche 1-3, worin der Empfangsknoten für jeden Datenfluss (12) zwischen den Übertragungs- und Empfangsknoten die folgenden Schritte ausführt, für den Fall, dass Pufferressourcen (9) zum Speichern von Dateneinheiten am Empfangsknoten knapp sind:

- Zählen der momentanen Anzahl von angeforderten Dateneinheiten in jeden Datenfluss, um eine Gesamtanzahl von angeforderten Dateneinheiten zu erhalten,

- Berechnen der Gesamtanzahl von zu gewährenden Credits in jedem Datenfluss durch Subtrahieren von einem vordefinierten Zielniveau der Pufferfüllung für die Gesamtanzahl von Datenflüssen

- die Gesamtanzahl von Dateneinheiten, die gegenwärtig in jedem der Puffer gespeichert sind, und

- die Gesamtanzahl von Credits, die vorher ausgegeben, aber noch nicht empfangen wurden, und

- Verteilen der Gesamtanzahl von Credits des Empfangsknotens proportional zu den durch die jeweiligen Teilnehmerinstanzen (7) angezeigten Funkkanalqualitäten (28).

5. Verfahren nach Anspruch 4, das Beschränken der Gesamtanzahl von Teilnehmerdaten in allen Datenströmen auf einen gewünschten Wert umfassend, der kleiner oder gleich der angeforderten Gesamtanzahl von Dateneinheiten ist.

6. Verfahren nach Anspruch 4 oder 5, das Verteilen der Anzahl von durch den Empfangsknoten ausgegebenen Credits proportional zu den Funkkanalqualitäten (28) umfassend, die durch die jeweiligen Teilnehmerinstanzen (7) angezeigt werden, für die der Empfangsknoten Funkübertragung von Dateneinheiten terminiert.

7. Funknetz-Empfangsknoten (6) zum Regulieren des Datenflusses von einem Übertragungsknoten (4), Folgendes umfassend: eine Pufferressource (9), eine Kapazitätszuweisungseinrichtung (23) zum Zuweisen von individuellen Mengen von Teilnehmerdaten an individuelle Teilnehmerinstanzen (6), ein Flusssteuerprotokoll und einen Scheduler (16), wobei der Knoten (6) dazu konfiguriert ist, eine Kapazitätsanforderung (10) zu empfangen, die vom Empfangsknoten die Erlaubnis anfordert, eine angezeigte Anzahl von Dateneinheiten zu senden, die im Übertragungsknoten noch nicht erledigt sind, und dass der Empfangsknoten (6) als Antwort auf die Kapazitätsanforderung dazu konfiguriert ist, einen Zuweisungsrahmen (11) an den Übertragungsknoten zu senden, wobei der Zuweisungsrahmen die Anzahl von Dateneinheiten anzeigt, die zu senden dem Übertragungsknoten erlaubt ist, wobei diese letztere Anzahl als Credits bezeichnet wird, **dadurch gekennzeichnet, dass** der Funknetzknoten (6) außerdem ein Mittel umfasst, um die momentane Anzahl von angeforderten Dateneinheiten zu zählen, ein Mittel, das angepasst ist, um die Anzahl von zu gewährenden Credits zu berechnen, indem von einem vordefinierten Zielniveau von Pufferfüllung die Anzahl von Dateneinheiten subtrahiert wird, die gegenwärtig im Puffer gespeichert sind, und die Anzahl von Credits, die vorher ausgegeben, aber noch nicht empfangen wurden, wobei diese Credits unten als ausstehende Credits bezeichnet sind, und ein Mittel, das dazu konfiguriert ist, die Anzahl von so berechneten gewährten Credits in einen Zuweisungsrahmen (10) einzurücken, um als Antwort auf die Kapazitätsanforderung an den Übertragungsknoten übertragen zu werden.

8. Funknetz-Empfangsknoten nach Anspruch 7, worin die Kapazitätszuweisungseinrichtung (23) einen Zähler (29) umfasst zum Aufrechterhalten eines laufenden Zählerstands der momentanen Anzahl ausstehender Credits, wobei ausstehende Credits definiert sind als die Anzahl von Dateneinheiten, die zu senden die Zuweisungseinrichtung dem Übertragungsknoten (4) erlaubt hat, obwohl die entsprechende Anzahl von Dateneinheiten noch nicht am Empfangsknoten (6) angekommen ist.

9. Funknetz-Empfangsknoten nach Anspruch 7 oder 8, worin eine Verteilungseinrichtung dazu angepasst ist, die Gesamtanzahl von durch den Empfangsknoten ausgegebenen Credits proportional zu den Funkkanalqualitäten (28) zu verteilen, die durch die jeweiligen Teilnehmerinstanzen (7) angezeigt sind, für die der Scheduler (16) die Funkübertragung von Dateneinheiten terminiert.

**Revendications**

1. Procédé de commande de flux pour réguler un flux de données entre un noeud de réseau radio émetteur (4) et un noeud de réseau radio récepteur (6) dans un réseau de transmission radio, dans lequel

- le noeud émetteur envoie une demande de capacité (10) au noeud récepteur demandant au noeud récepteur l'autorisation d'envoyer un nombre indiqué d'unités de données qui sont en attente dans le noeud émetteur, et le noeud récepteur en réponse à la demande de capacité envoie une trame d'attribution (11) au noeud émetteur, ladite trame d'attribution indiquant le nombre d'unités de données que le noeud émetteur a l'autorisation d'émettre, ce dernier nombre étant appelé crédits, **caractérisé en ce que** le noeud récepteur effectue les étapes suivantes pour un flux de données (12) entre les noeuds émetteur et récepteur dans le cas où les ressources de mémoire tampon (9) pour mémoriser des unités de données au niveau du noeud récepteur sont limitées :

- compter le nombre instantané d'unités de données demandées,
- calculer le nombre de crédits à accorder en soustrayant, d'un niveau cible prédéfini de remplissage de mémoire tampon,
- le nombre d'unités de données actuellement mémorisées dans la mémoire tampon, et
- le nombre de crédits donnés précédemment mais pas encore reçus, ces crédits étant appelés ci-dessous crédits en attente,
- insérer le nombre de crédits accordés ainsi calculés dans une trame d'attribution (10) pour transmission au noeud émetteur en réponse à la demande de capacité.

**2.** Procédé selon la revendication 1, consistant à comparer le nombre d'unités de données actuellement mémorisées dans la mémoire tampon avec le nombre d'unités de données demandées, sélectionner le plus petit de ces nombres en tant que nombre potentiel de crédits accordés duquel le nombre de crédits en attente est soustrait afin d'obtenir le nombre de crédits accordés.

**3.** Procédé selon la revendication 2, dans lequel le noeud récepteur conserve un compte courant du nombre de crédits en attente, cela étant réalisé

- en augmentant le compte à chaque fois qu'une trame d'attribution est envoyée, ledit compte étant augmenté du nombre de crédits accordés indiqué dans les trames d'attribution, et
- diminuer ledit compte à chaque fois que des unités de données sont reçues, ledit compte étant diminué du nombre d'unités de données reçues.

**4.** Procédé selon l'une quelconque des revendications 1 à 3, dans lequel le noeud récepteur effectue les étapes suivantes pour chaque flux de données (12) entre les noeuds émetteur et récepteur dans le cas où les ressources de mémoire tampon (9) pour mémoriser des unités de données au niveau du noeud récepteur sont limitées :

- compter le nombre instantané d'unités de données demandées dans chaque flux de données pour obtenir un nombre total d'unités de données demandées,
- calculer le nombre total de crédits à accorder dans chaque flux de données en soustrayant, d'un niveau cible prédéfini de remplissage de mémoire tampon pour le nombre total de flux de données,
- le nombre total d'unités de données actuellement mémorisées dans chacune des mémoires tampons, et
- le nombre total de crédits précédemment donnés mais pas encore reçus, et
- distribuer la quantité totale de crédits du noeud récepteur r proportionnellement aux qualités de canal radio (28) indiquées par les entités d'utilisateur (7) respectives.

**5.** Procédé selon la revendication 4, comprenant la limitation de la somme totale de données d'utilisateur dans tous les flots de données à une valeur souhaitée inférieure ou égale au nombre demandé total d'unités de données.

**6.** Procédé selon la revendication 4 ou 5, comprenant la distribution du nombre de crédits donnés par le noeud récepteur proportionnellement aux qualités de canal radio (28) indiquées par les entités d'utilisateur (7) respectives pour lesquelles le noeud récepteur planifie une transmission radio d'unités de données.

**7.** Noeud récepteur de réseau radio (6) pour réguler le flux de données d'un noeud émetteur (4), comprenant une ressource de mise en mémoire tampon (9), un dispositif d'attribution de capacité (23) pour attribuer des quantités individuelles de données d'utilisateur à des entités d'utilisateur individuelles (6), un protocole de commande de flux et un planificateur (16), le noeud (6) étant configuré pour recevoir une demande de capacité (10) demandant au noeud récepteur l'autorisation d'envoyer un nombre indiqué d'unités de données qui sont en attente dans le noeud émetteur, et le noeud récepteur (6), en réponse à la demande de capacité, étant configuré pour envoyer une trame d'attribution (11) au noeud émetteur, ladite trame d'attribution indiquant le nombre d'unités de données que le noeud émetteur a l'autorisation d'émettre, ce dernier nombre étant appelé crédits, **caractérisé en ce que** le noeud de réseau radio (6) comprend en outre des moyens pour compter le nombre instantané d'unités de données demandées, des moyens adaptés pour calculer le nombre de crédits à accorder en soustrayant, d'un niveau cible prédéfini de remplissage de mémoire tampon, le nombre d'unités de données actuellement mémorisées dans la mémoire tampon et le nombre de crédits précédemment donnés mais pas encore reçus, ces crédits étant appelés ci-dessous crédits en attente, et des moyens configurés pour insérer le nombre de crédits accordés ainsi calculés dans une trame d'attribution (10) pour transmission au noeud émetteur en réponse à la demande de capacité.

8. Noeud récepteur de réseau radio selon la revendication 7, dans lequel le dispositif d'attribution de capacité (23) comprend un compteur (29) pour conserver un compte courant du nombre instantané de crédits en attente, les crédits en attente étant définis en tant que nombre d'unités de données que le dispositif d'attribution a permis au noeud émetteur (4) d'envoyer bien que le nombre correspondant d'unités de données ne soit pas encore arrivées au noeud récepteur (6).

9. Noeud récepteur de réseau radio selon la revendication 7 ou 8, dans lequel un dispositif de distribution adapté pour distribuer le nombre total de crédits donnés par le noeud récepteur proportionnellement aux qualités de canal radio (28) indiquées par les entités d'utilisateur (7) respectives pour lesquelles le planificateur (16) planifie une transmission radio d'unités de données.

UMTS

CORE NETWORK

Iu

UTRAN
Iur

SRNC → DRNC

Iub

Node-B    Node-B    Node-B    Node-B

Uu

FIG 1  PRIOR ART

SRNC 4

Buffered data for UE1    Buffered data for UE 2    . . . .    Buffered data for UE i

12
10  CRF    AF  11
13

Node-B

Buffered data for UE1    Buffered data for UE 2    . . . .    Buffered data for UE i

FIG 2  PRIOR ART

FIG 3 PRIOR ART

FIG 4 PRIOR ART

FIG 5

SRNC BUFFER 8

NODE-B BUFFER 9

TARGET LEVEL

10 PDU

100 PDU

90 PDU

SRNC

NODE-B

CARQ 100

20C

90-10-(10+20+30) PDU

PDUs FROM PREVIOUSLY GRANTED CREDITS

10C

20C

30C

ALL TO THE SAME BUFFER

PDUs FROM GRANTED CREDIT

20C

TIME

TIME

PER-FLOW BASED
FLOW CONTROL PROCESS

FIG 6

SRNC BUFFER 8

NODE-B BUFFER 9

TARGET LEVEL

10 PDU

} UE BUFFER 1
} UE BUFFER 2
} UE BUFFER 3

100 PDU

90 PDU

SRNC                    NODE-B

CARQ 100

PDUs FROM
PREVIOUSLY
GRANTED
CREDITS

20 (8,8,4) C                    90-10-(10+20+30) PDU

10C                    TO UE1

20C                    TO UE2

30C                    TO UE3

PDUs
FROM
GRANTED
CREDIT

8C                    TO UE1

8C                    TO UE2

4C                    TO UE3

TIME                    TIME

PER-NODE BASED CREDIT FLOW
CONTROL PROCESS

FIG 7

START

SET OUTSTANDING
CREDITS COUNTER
TO ZERO
/ 80

REQUEST? — NO / YES — 81

SCARCE
MEMORY? — NO — 82

SET GRANTED CREDITS
EQUAL TO THE NUMBER
OF PENDING DATA UNITS — 83

YES

SET GRANTED
CREDITS EQUAL TO
THE AVAILABLE
MEMORY SPACE — 84

SET OUTSTANDING CREDITS COUNTER EQUAL TO THE
NUMBER OF GRANTED CREDITS AND SEND OUT AN
ALLOCATION FRAME — 85

A

FIG 8

**A**

**90**
DATA ARRIVES? — NO →

**92**
REQUEST? — YES →

**93**
OVERWRITE THE PREVIOUS VALUE OF PENDING DATA UNITS

DATA ARRIVES? — YES ↓

**91**
SUBTRACT THE NUMBER OF ARRIVED DATA UNITS FROM THE OUTSTANDING CREDIT COUNTER

REQUEST? — NO ↓

**94**
ALLOCATION? — YES →

**95**
SEND OUT AN ALLOCATION FRAME. INCREMENT THE OUTSTANDING CREDITS COUNTER WITH THE GRANTED CREDIT VALUE

ALLOCATION? — NO ↓

**96**
IS THE USER STILL ACTIVE?

YES ← IS THE USER STILL ACTIVE? — NO → END

FIG 9

START

**100**
SUBTRACT THE AMOUNT OF QUEUING DATA AND THE AMOUNT OF PENDING DATA AND THE OUTSTANDING CREDIT COUNTER FROM THE MEMORY SPACE AND SET THE GRANTED CREDITS TO THE COMPUTED VALUE

**101**
IS THERE MORE GRANTED CREDITS THAN PENDING DATA? — YES →

**102**
SET THE GRANTED CREDITS EQUAL TO THE PENDING DATA

IS THERE MORE GRANTED CREDITS THAN PENDING DATA? — NO ↓

END

FIG 10

START

SET OUTSTANDING
CREDIT COUNTERS TO
ZERO
80

110
ANY
QUALITY
REPORTS?

NO

YES

111
PROCESS THE
RECEIVED QUALITY
REPORT(S)

81
ANY
REQUESTS?

NO

YES

82
SCARCE
MEMORY?

NO

YES

83
SET THE GRANTED
CREDIT VALUES EQUAL
TO THE NUMBER OF
PENDING DATA UNITS

84
SET TOTAL GRANTED
CREDITS EQUAL TO THE
AVAILABLE MEMORY
SPACE

112
SEND OUT ALLOCATION FRAMES WHERE THE
TOTAL GRANTED CREDITS ARE SHARED
PROPORTIONALLY TO THE USERS

EXPERIENCED CHANNEL QUALITIES. SET THE
OUTSTANDING CREDITS COUNTERS EQUAL TO THE
NUMBER OF GRANTED CREDITS

B

FIG 11

FIG 12

START

130

COMPUTE THE TOTAL AMOUNT OF QUEUING DATA UNITS BY
SUMMING UP THE NUMBER OF QUEUING DATA UNITS IN ALL
ACTIVE BUFFERS

131

COMPUTE THE TOTAL AMOUNT OF PENDING DATA UNITS BY
SUMMING UP THE NUMBER OF PENDING DATA UNITS FOR ALL
ACTIVE BUFFERS

132

COMPUTE THE TOTAL AMOUNT OF OUTSTANDING CREDITS BY
SUMMING UP THE NUMBER OF OUTSTANDING CREDITS FOR ALL
ACTIVE USER BUFFERS

133

SORT THE ACTIVE USERS INTO A LIST ACCORDING TO THEIR
EXPERIENCED CHANNEL QUALITIES

134

REMOVE ALL SUCH USERS FROM THE LIST THAT HAVE NO
PENDING DATA

135

COMPUTE THE TOTAL SUM OF INDICATED CHANNEL QUALITIES BY
SUMMING UP THE CHANNEL QUALITIES FOR ALL USERS IN THE
SORTED LIST

C

FIG 13

C

SUBTRACT THE TOTAL AMOUNT OF QUEUING DATA AND THE TOTAL AMOUNT OF PENDING DATA AND THE TOTAL OUTSTANDING CREDIT COUNTER FROM THE MEMORY SPACE AND SET THE TOTAL GRANTED CREDITS TO THE COMPUTED VALUE — 140

COMPUTE A METRIC THAT REPRESENTS A FRACTION BETWEEN THE BEST CHANNEL QUALITY (IN THE SORTED LIST) AND THE TOTAL SUM OF CHANNEL QUALITIES — 141

COMPUTE THE GRANTED CREDITS FOR THE CORRESPONDING BEST QUALITY USER BASED ON THE PRECEEDING METRIC AND THE TOTAL GRANTED CREDITS — 142

IS THERE MORE GRANTED CREDITS THAN PENDING DATA? — 143

NO → REMOVE THE BEST QUALITY USER FROM THE SORTED LIST — 145

ARE THERE ANY USERS IN THE LIST? — 146

YES

NO

SET THE GRANTED CREDITS FOR THE BEST QUALITY USER TO THE AMOUNT OF DATA UNITS THAT ARE PENDING FOR SAID BEST QUALITY USER — 146

END

FIG 14

**EP 1 523 134 B1**

**REFERENCES CITED IN THE DESCRIPTION**

**Patent documents cited in the description**

- WO 0249292 A
- US 20030016698 A1
- EP 0912016 A